# EUROPEAN PATENT SPECIFICATION

(11) **EP 3 664 485 B1**
(45) Date of publication and mention of the grant of the patent: **19.07.2023**
(21) Application number: 20152078.0
(22) Date of filing: 26.07.2013
(51) Int. Cl.: H04W 8/08, H04W 76/28, H04W 48/12, H04W 76/27, H04W 52/02, H04W 48/20, H04W 36/00, H04W 64/00

(54) **REPORTING MOBILITY STATE IN RRC-IDLE**
MELDUNG VOM MOBILITÄTS-ZUSTAND IN RRC-IDLE
SIGNALEMENT DE L'ÉTAT DE MOBILITÉ EN RRC-IDLE

(30) Priority: 06.08.2012 GB 201213970
(43) Date of publication of application: 10.06.2020
(62) Divisional of application: 13827610.0
(73) Proprietor: NEC Corporation, 108-8001 Tokyo (JP)
(72) Inventor: RAKOTOHARISON, Lanto, Reading, Berkshire RG2 0TD (GB); JACTAT, Caroline, Reading, Berkshire RG2 0TD (GB)
(74) Representative: MacDougall, Alan John Shaw

(56) References cited:
- EP-A1- 2 883 375
- EP-B1- 2 883 375
- WO-A1-2010/017012
- WO-A1-2014/010977
- CHINA UNICOM: "Discussion on UE Mobility Assistant Information", 3GPP DRAFT; R2-123508 DISCUSSION ON UE MOBILITY INFORMATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Qingdao, China; 20120813 - 20120817 3 August 2012 (2012-08-03), XP050665045, Retrieved from the Internet: URL:http://www.3gpp.org/ftp/tsg_ran/WG2_RL 2/TSGR2_79/Docs/ [retrieved on 2012-08-03]
- CATT: "Analysis of UE Assistance Information for eDDA", 3GPP DRAFT; R2-122159 ANALYSES OF UE ASSISTANCE INFORMATION FOR EDDA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20120521 - 20120525, 15 May 2012 (2012-05-15), XP050607159, [retrieved on 2012-05-15]
- QUALCOMM INCORPORATED ET AL: "Proposal for UE Assistance Information", 3GPP DRAFT; R2-122831_PROPOSAL FOR UE ASSISTANCE INFORMATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20120521 - 20120525, 15 May 2012 (2012-05-15), XP050607415,

## Description

### Technical Field

The present invention relates to methods and apparatuses of a communication system for configuring mobile or fixed communication devices. The invention has particular, but not exclusive, relevance to optimisation of power consumption and mobility for user equipment used in Long Term Evolution (LTE) Advanced systems as currently defined in associated 3rd Generation Partnership Project (3GPP) standards documentation.

### Background Art

In communication systems operating according to the LTE Advanced standards, a base station (eNB) provides User Equipment (UE), such as mobile telephones, access to a core network (and hence to other user equipment or other network nodes) via one or more of its cells. Communication between the mobile telephones and the base station is controlled using a Radio Resource Control (RRC) protocol as defined in 3GPP TS 25.331. RRC handles the control plane signalling of Layer 3 between mobile telephones and the Radio Access Network (RAN), and includes, inter alia, functions for broadcasting system information, paging, connection establishment and release, radio bearer establishment, reconfiguration and release, mobility procedures, and power control.

At any given time, mobile telephones may operate either in an 'RRC idle mode' or an 'RRC connected mode', the latter of which includes a 'CELL_PCH' (Cell Paging channel) and a 'URA_PCH' (URA Paging channel) modes, a 'CELL_FACH' (Forward access channel) mode, and a 'CELL_DCH' (Dedicated Channel) mode.

Mobile telephones benefit from the lowest energy consumption in the RRC idle mode (i.e. when there is no data transmitted between the base station and the mobile telephone). The states in the RRC connected mode, in order of power consumption, from the highest to lowest, are: 'CELL_DCH', 'CELL_FACH', 'CELL_PCH' and 'URA_PCH'. A mobile telephone's power consumption is generally about 50 percent less when operating in the 'CELL_FACH' mode, and about 98-99 percent less when operating in one of the PCH modes, compared to the 'CELL_DCH' mode.

The base station controls the transition between the various operating modes for each mobile telephone within its cell(s). Since the setting up and termination of an RRC connection between the base station and the mobile telephone requires exchanging of signalling messages and hence utilises valuable system resources, and also takes some time to complete, the transition from connected to idle mode is only allowed under specific circumstances as defined in the 3GPP TS 25.331 standard. For example, the serving base station might instruct a mobile telephone to enter the RRC idle mode only after it has confirmed that there is no more data to be transmitted to/from the particular mobile telephone (e.g. both uplink and downlink buffers are empty).

In particular, RRC protocol provides inactivity timers to control transitions to lower energy consuming states (i.e. when no data is transmitted within a certain time period), thereby preserving battery life of the mobile telephones whenever possible whilst also ensuring that the transition to idle mode does not happen too soon. A so-called 'T1' timer controls the mobile telephone's transition from DCH to FACH mode, a 'T2' timer controls transition from FACH to PCH mode, and a 'T3' timer controls transition from PCH to idle mode.

Different inactivity timer values can be set and broadcast by the base station, which result in different overall energy consumption of the mobile telephones (both active and idle) served by the given base station. It is therefore important to select these timers such that each mobile telephone can benefit from the most optimal power consumption.

For mobile telephones operating in the RRC connected mode, base stations may optimise power consumption by configuring a so-called Discontinuous Reception (DRX) and/or Discontinuous Transmission (DTX). Both techniques are based on reducing the mobile telephone's transceiver duty cycle while in active operation.

In DRX mode, the base station sets a cycle during which the mobile telephone is operational for a certain period of time and the base station transmits all scheduling and paging information (for this mobile telephone) during this period only. The mobile telephone can thus turn off its transceiver for the rest of the DRX cycle. DRX also applies to the RRC idle mode with a longer cycle time than in connected mode.

In DTX mode, the mobile telephone does not turn off its transceiver completely, but keeps monitoring the Physical Downlink Control Channel (PDCCH) to be able to receive data from the base station without undue delay.

The longer the 'off' duration relative to the duty cycle, the more power saving can be achieved. However, when operating in DRX and/or DTX mode, the mobile telephone's data throughput is reduced in proportion to the achieved power savings.

As mobile telephones operating in the RRC connected mode move around in the area covered by the communication system, they are handed over from one cell (i.e. base station) to another, depending on signal conditions and other requirements, such as requested quality of service, the type of service used, overall system load, and the like. A trigger for handing over a mobile telephone to a new cell may be based on measurements of the cells performed by the particular mobile telephone. The type of triggers and the related measurements to be performed by mobile telephones are detailed in section 5.5.4 of the 3GPP TS 36.331 standard. In particular, the above standard defines measurement report triggering related to eight different event types (Events A1 to A6, B1, and B2) that the base station may configure for user equipment within its cell(s). In summary, such triggers may generally relate to an event when the mobile telephone's serving cell (or a neighbouring cell) becomes better (or becomes worse) than either a pre-defined threshold or a pre-determined offset value.

Further details of the overall mobility sequence are described in section 10.1.2 of the 3GPP TS 36.300 standard, which describes the configuration of measurements by the base station and the subsequent triggering of handover.

In order to optimise utilisation of their bandwidth, LTE base stations receive periodic signal measurement reports from each served mobile device, which contain information about the perceived signal quality on a given frequency band used by (or being a candidate frequency band for) that mobile device. These signal measurement reports are then used by the base stations in their decision to allocate certain parts of their bandwidth to the served mobile devices and also to hand over mobile devices to other base stations (or other frequency bands / other radio access technologies (RATs)) when the signal quality does not meet the established criteria. The handing over of a mobile device might be necessary, for example, when the mobile device has moved away from the given base station, and also when an interference problem has arisen. Such measurement reports can be sent only by mobile telephones operating in the RRC connected mode.

On the other hand, whilst in the RRC idle mode, mobile telephones are programmed to select (or camp on) a 'serving' cell having the best quality signal so that when new data is to be transmitted to/from these mobile telephones, they can benefit from the most favourable signal conditions. In the event that an idle mobile telephone detects a new cell with better signal quality than the current serving cell, e.g. due to the mobile telephone changing its location, the mobile telephone performs a so-called cell reselection procedure (i.e. a sort of handover for idle user equipment). However, an idle mode mobile telephone does not inform the network about the selected new cell as long as this cell is within the same 'tracking area' (i.e. a larger geographic area comprising a pre-defined set of cells), because the radio network transmits system information and UE specific paging messages within the whole tracking area thus making it possible to initiate communication to/from the mobile telephone regardless of the current cell it camps on. Further details of the cell reselection procedure are disclosed in the 3GPP TS 36.304 standard.

In order to optimise cell reselection procedures, 3GPP has defined three mobility states: low-mobility (i.e. UE moving at pedestrian speed), medium-mobility (i.e. UE moving at medium speed e.g. in a slow-moving vehicle, such as a bus), and high-mobility (i.e. UE moving at high speed e.g. in a fast-moving vehicle, such as a high speed train) state. Mobile telephones operate in the low-mobility state unless pre-defined criteria are met for switching to either the medium-mobility or the high-mobility state. The parameters needed to establish a high-mobility and/or medium-mobility state are chosen and broadcast by the serving base station, and include e.g. the duration for evaluating the number of cell reselections (i.e. a 'TCRmax' parameter), the maximum number of cell reselections to enter high-mobility state (i.e. an 'NCR_H' parameter), the maximum number of cell reselections to enter medium-mobility state (i.e. an 'NCR_M' parameter), a number of speed dependent scaling factors, and the additional time period before the mobile telephone can enter low-mobility state (i.e. a 'TCRmaxHyst' parameter). In order to establish its mobility state in RRC connected mode, the mobile telephone uses the number of handovers instead of the number of cell reselections.

### Summary of Invention

### Technical Problem

Once the criteria set by the base station are met, the mobile telephone enters into the corresponding mobility state and changes its behaviour accordingly. In particular, since mobile telephones in the medium or high mobility state are moving away from the serving cell at a faster speed than mobile telephones in the normal mobility state, such fast moving mobile telephones might reach the edge of the serving cell sooner where they may experience unfavourable signal conditions before the cell reselection process is completed. Therefore, mobile telephones can change the timing of cell reselection in dependence of their current mobility state so that a new serving cell can be established in a timely manner. For example, in the high-mobility state, cell reselection might start as much as 7 seconds sooner than it would if the mobile telephone were in the low-mobility state. The exact timing of cell reselection is determined by the mobile telephone based on the number of cells visited within a specified time window (e.g. using the values of TCRmax, NCR_H, NCR_M and TCRmaxHyst) and an appropriate scaling factor.

Besides the mobile telephone's current RRC state, DRX/DTX configuration in use, the type of applications running on a particular mobile telephone also influence its overall power consumption. It is known that there are a range of device types that are capable of running a wide variety of data applications, often in parallel. Such diversity in device and application type creates a corresponding diversity in the traffic profiles that must be efficiently supported by the RANs to which these devices (e.g. mobile telephones) are connected.

Moreover, applications running on mobile telephones may be designed without consideration for the characteristics of cellular networks and may thus exhibit data traffic profiles that are not well suited to wireless connections. Therefore, it is very difficult for the network to find the right balance between UE power consumption and other factors, such as user experience, data transfer latency, network efficiency and control plane signalling overhead.

RRC state control mechanisms and DRX configurations may be optimized for particular applications (or application types). However, these configurations may not remain optimal anymore when new applications are installed/started/stopped on the mobile telephone thus changing the traffic profile exhibited by the particular mobile telephone over time. In fact, they might lead to too frequent RRC state transitions and to excessive signalling loads (in the core network as well as the RAN). Alternatively, the RRC connected mode may be maintained for extended periods of time, although this may result in a higher power consumption than in idle mode and may also place additional demands on system resources and their management, particularly for very large connected mode user populations.

3GPP is seeking to optimise operation of mobile telephones (i.e. to provide a better user experience and improve battery life) by allowing the provision of assistance indication from the mobile telephones to the base station. Such assistance indication can be used by a serving base station for configuring the parameters used by mobile telephones operating in connected RRC mode. The assistance indication can also be used for configuring connection release parameters. The suggested assistance indication can be e.g. in the form of a 1-bit "UE preference for power optimized configuration" indication sent from the mobile telephone to the base station. By sending this indication, the mobile telephone can communicate its preference, i.e. whether or not to use a configuration that is primarily optimized for power saving (e.g. using a longer DRX cycle or a shorter RRC connection release timer).

However, a suitable mechanism for mobile telephones to set and provide the mobility state and/or power consumption state indication(s) does not exist.

The present invention aims to provide an improved communication system and improved components of the communication system which overcome or at least alleviate one or more of the above issues.

3GPP draft R2-123508 discusses UE "Mobility Assistant Information".

EP 2 883 375 A1 discloses a method and apparatus for transmitting mobility-related information in a wireless communication system. A user equipment (UE) receives a configuration for transmission of mobility-related information from a network during connection establishment, and transmits the mobility-related information to the network based on the configuration of the transmission of the mobility-related information.

WO 2014/010977 A1 relates to a method for a terminal to report mobility state information in a wireless communication system. The method comprises estimating a mobility state, grouping the estimated mobility state in order to calculate a mobility group state, and reporting mobility state information relating to the mobility group state to a network.

The invention is defined in the appended independent claims.

In one example there is provided a method according to claim 1.

The current mobility state might be established by counting the number of cell reselections and/or handovers performed by said mobile telephone over a pre-determined time period.

The information identifying the current mobility state might identify one of a low-mobility state, a medium-mobility state, or a high-mobility state.

The determining step might comprise determining whether said current mobility state should be reported in response to a change in said mobility state. Alternatively, the determining step might comprise determining whether said current mobility state needs to be reported in response to receiving a request from at least one of said plurality of base stations. The determining step might also comprise determining whether said current mobility state should be reported when a pre-determined amount of time has passed since the information was last sent or since a previous change in said mobility state.

The information identifying the current mobility state might be send using at least one radio resource control (RRC) protocol message including an information element.

In one possibility, the mobile telephone receives a non access stratum (NAS) message (e.g. an 'NAS configuration Mobile-Originated (MO) data' message) configuring said mobile telephone for sending said information identifying the current mobility state of said mobile telephone to one of said plurality of base stations.

The current power consumption state of said mobile telephone might be established and sent to said one of said plurality of base stations.

Said current mobility state might be sent to said one of said plurality of base stations if is determined that said one of said plurality of base stations has configured said power consumption state.

In another example not claimed, but useful to understand the invention, there is provided a method performed by a mobile telephone for providing information to a communication system comprising a plurality of base stations, the method comprising: establishing a current power consumption state of said mobile telephone; determining whether said current power consumption state should be sent to said communication system; generating information identifying the current power consumption state of said mobile telephone if it is determined that the current power consumption state should be sent to said communication system; and sending said information identifying the current power consumption state of said mobile telephone to at least one of said plurality of base stations.

The information identifying the current power consumption state might identify one of a default power consumption state, or an optimised power consumption state.

The determining step might comprise determining whether said current power consumption state should be reported in response to a change in said power consumption state. Alternatively, the determining step might comprise determining whether said current power consumption state needs to be reported in response to receiving a request from at least one of said plurality of base stations. The request might comprise at least one of a system broadcast information message, a cell Radio Resource Control (RRC) measurement configuration message, and a non-access stratum (NAS) configuration message.

The determining step might also comprise determining whether said current power consumption state should be reported when a pre-determined amount of time has passed since the information was last sent or since a previous change in said power consumption state.

The information identifying the current power consumption state might be sent using at least one radio resource control (RRC) protocol message including an information element. The at least one RRC message might be sent when said mobile telephone changes its operation from an RRC idle mode to an RRC connected mode. The RRC message might comprise at least one of an 'RRC Connection Setup Complete' message, an 'RRC Measurement Report' message, a mobility state report message, and a power consumption state message.

The method might further comprise receiving a non access stratum (NAS) message (e.g. an 'NAS configuration MO data' message) configuring said mobile telephone for sending said information identifying the current power consumption state of said mobile telephone to one of said plurality of base stations.

Optionally, a current mobility state of said mobile telephone might be established and sent to said one of said plurality of base stations.

In yet another example there is provided a method performed by a according to claim 2.

In a further example not claimed but useful to understand the invention, there is provided a method performed by a base station, the method comprising: receiving information identifying a current power consumption state of a mobile telephone served by said base station.

The base station might configure at least one operating parameter of said mobile telephone, in which case said configuring might be based on said received information. The operating parameter might be at least one of an inactivity timer, a discontinuous operation mode, a cell reselection parameter, and a reporting condition. The operating parameter might be transmitted to the mobile telephone.

The method might further comprise transmitting a request to said mobile telephone to provide said information. In this case, the request might comprise broadcast system information. Alternatively, the request might comprise at least one radio resource control (RRC) protocol message including an information element. The RRC protocol message might be an 'RRC Connection Reconfiguration' message. The request might comprise at least one non-access stratum configuration message.

The method might further comprise configuring said mobile telephone to provide said information in response to a change in said mobility state of said mobile telephone. Alternatively, the method might configure the mobile telephone to provide said information in response to a change in said power consumption state of said mobile telephone. The method might also configure said mobile telephone to provide said information periodically.

The base station might receive said information via another network entity, e.g. a neighbour base station. In this case, the base station might receive said information over an X2 interface from said neighbour base station.

The method might also comprise obtaining, from another network entity, subscription information identifying whether said mobile telephone is configured to provide said information. This other network entity might be a home subscriber server (HSS) or a mobility management entity (MME) and the subscription information might be included in an 'Initial Context Setup Request' message. For example, the subscription information might be included in a 'Subscription Data' information element embedded in said 'Initial Context Setup Request' message.

Moreover, another example provides a user equipment according to claim 3.

Another example not claimed but useful to understand the invention, provides a mobile telephone for providing information to a communication system comprising a plurality of base stations, the mobile telephone comprising: means for establishing a current power consumption state of said mobile telephone; means for determining whether said current power consumption state should be sent to said communication system; means for generating information identifying the current power consumption state of said mobile telephone if it is determined that the current power consumption state should be sent to said communication system; and means for sending said information identifying the current power consumption state of said mobile telephone to at least one of said plurality of base stations.

Another example provides a base station, comprising means for receiving information identifying a current mobility state of a mobile telephone served by said base station.

Another example provides a base station, comprising means for receiving information identifying a current power consumption state of a mobile telephone served by said base station.

The base station might further comprise means for configuring at least one operating parameter of said mobile telephone based on said received information. The operating parameter might comprise at least one of an inactivity timer, a discontinuous operation mode, and a cell reselection parameter.

Another example provides a computer program product comprising computer implementable instructions for causing a programmable computer device to become configured as a mobile telephone as described above. The computer software products may be provided on a carrier signal or on a recording medium, such as a CD, DVD or the like.

### Advantageous Effects of Invention

It might be advantageous for the network to be aware of the mobile telephone's mobility (i.e. the speed at which it is moving) and/or power consumption state in order to adjust its power consumption configuration without compromising on its ability to perform cell reselection (or handover) in a timely manner. For example, a short DRX cycle (i.e. when the mobile telephone's transceiver is instructed to turn on more frequently) is more suitable for UE in high mobility state, such as mobile telephones used on a high-speed train or in cars travelling on a motorway. A correctly set up DRX cycle allows for appropriate timing of cell reselection and/or handover related signalling by the mobile telephones.

### Brief Description of Drawings

Embodiments of the invention will now be described, by way of example only, with reference to the attached Figs. in which:
[fig. 1]Fig. 1 schematically illustrates a mobile telecommunication system to which embodiments of the invention may be applied;
[fig. 2]Fig. 2 is a block diagram illustrating the main components of the mobile telephone forming part of the system shown in Fig. 1;
[fig. 3]Fig. 3 is a block diagram illustrating the main components of a base station forming part of the system shown in Fig. 1;
[fig.4]Fig. 4 shows, in accordance with the invention, an example timing diagram illustrating a method performed by components of the communication system when reporting a change in the mobility state of a mobile telephone;
[fig.5]Fig. 5 shows example timing diagram illustrating a method performed by components of the communication system when reporting a change in the power consumption state of a mobile telephone;
[fig.6]Fig. 6 shows an example timing diagram illustrating another method performed by components of the communication system when reporting a change in the mobility state of a mobile telephone;
[fig.7]Fig. 7 shows an example timing diagram illustrating another method performed by components of the communication system when reporting a change in the power consumption state of a mobile telephone;
[fig.8]Fig. 8 shows an example timing diagram illustrating a method performed by components of the communication system when exchanging optimised power consumption and/or mobility configuration between the home subscriber server and the serving base station; and
[fig.9]Fig. 9 shows an example timing diagram illustrating a further method performed by components of the communication system when reporting a change in the mobility state and/or power consumption state of a mobile telephone.

### Description of Embodiments

### (Overview)

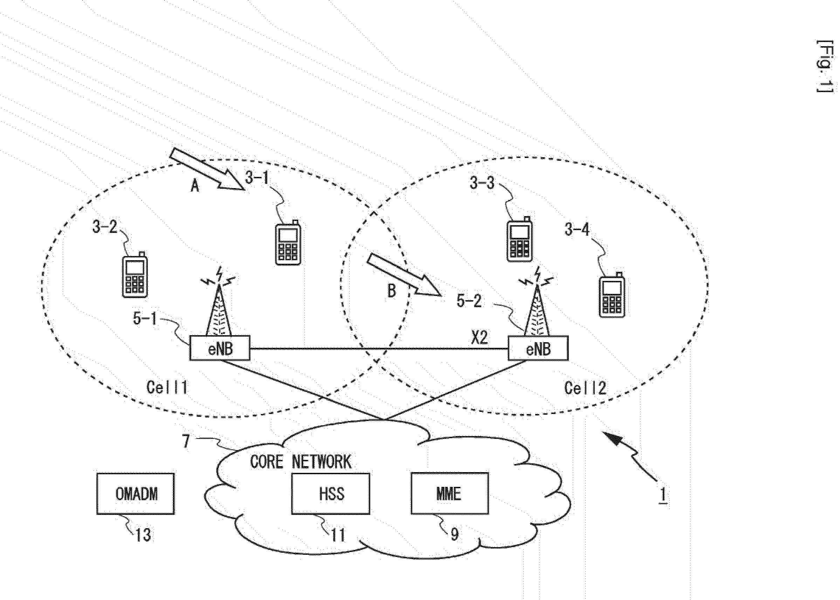

Fig. 1 schematically illustrates a mobile (cellular) telecommunication system 1 that includes user equipment, e.g. mobile telephones 3-1 to 3-4 served by base stations 5-1 and 5-2. The base stations 5-1 and 5-2 each operate a number of cells (i.e. Cell 1 and Cell 2, respectively), within which they provide access to a core network 7 for the mobile telephones 3. In this example, Cell 1 and Cell 2 belong to the same tracking area.

In this system, the base stations 5 are coupled to each other via an X2 interface. The base stations 5 are also coupled to a core network 7 that includes, amongst other, a Mobility Management Entity (MME) 9 that manages the mobility of mobile telephones 3 within the core network 7, and a Home Subscriber Server (HSS) 11 which stores and enforces user subscription related configuration. The core network 7 is also coupled (e.g. via a gateway (not shown)) to a so-called Open Mobile Alliance Device Management (OMA DM) entity 13 that configures the mobile telephones 3.

Initially, mobile telephone 3-1 enters the coverage area of the current serving cell (i.e. Cell 1 of base station 5-1) from another cell (not shown), as indicated by arrow A. At this phase, the mobile telephone 3-1 operates in RRC idle mode and has selected Cell 1 to camp on because Cell 1 provides the best signal quality. However, this particular mobile telephone 3-1 has already performed a number of cell reselections within a specified time frame, thus it determines that its mobility state has changed (e.g. it is now in the medium or high mobility state instead of normal mobility state or vice versa). It has also detected, e.g. by listening to broadcast system information (or by any other suitable way), that the serving base station 5-1 needs information regarding the mobility state of this mobile telephone 3-1 (or that of each mobile telephone 3 served by this base station 5-1).

Therefore, the mobile telephone 3-1 triggers an RRC connection establishment with the network, by generating and sending an RRC connection request message to the serving base station 5-1. The base station 5-1 responds with an RRC connection setup message which contains the necessary configuration for the mobile telephone 3-1 to communicate with the network and causes the mobile telephone 3-1 to transition from RRC idle mode to RRC connected mode. Next, the mobile telephone 3-1 provides, to the network, information identifying its current mobility state using a suitable RRC message, such as a message confirming to the base station 5-1 that the RRC connection setup is complete. This information allows the network to reconfigure RRC connection release timing (i.e. set inactivity timers T1 to T3) for the mobile telephone 3-1 accordingly. For example, the network may select relatively longer DRX cycle values if the mobile telephone's mobility state is reported to be low and relatively short DRX cycle values if the mobility state is reported to be medium or high.

If the mobile telephone 3-1 does not send or receive data anymore before it is leaving Cell 1 (as indicated by arrow B), it might return to RRC idle mode if the timers configured by the base station 5-1 have expired. In this case, the idle mobile telephone 3-1 selects a new cell to camp on (e.g. Cell 2 operated by base station 5-2), according to the procedures described above. If this subsequent cell reselection does not result in a change of its mobility state as well, the mobile telephone 3-1 maintains its idle mode RRC operation and does not report its mobility state to the new serving base station 5-2 after the cell reselection is complete.

However, since the network has been previously informed (i.e. via base station 5-1) about the current mobility state of the mobile telephone 3-1, the new serving base station 5-2 has sufficient information to configure RRC connection release timing for the mobile telephone 3-1, in case the mobile telephone 3-1 establishes an RRC connection again whilst located within the coverage area of Cell 2. This might be possible, in case the neighbouring base stations 5-1 and 5-2 exchange information with each other regarding a particular mobile telephone's 3 mobility state using e.g. the X2 interface.

Fig. 1 also illustrates a second mobile telephone 3-2 served by base station 5-1 in its Cell 1. This mobile telephone 3-2 might be operating in either the RRC Idle or the RRC Connected state. However, this mobile telephone 3-2 (or its user) has just started (or terminated) a number of applications, which causes a change in its power consumption state (e.g. from a default power consumption state to an optimised power consumption state, or vice versa). Moreover, the mobile telephone 3-2 (e.g. its operating system) might detect that the current RRC configuration is not optimal for conserving battery life considering the currently running application(s). Since the network is generally not aware of the applications running on the mobile telephone 3-2, other than the status of uplink/downlink data transmit queues and related traffic parameters (even though these might be influenced by the running applications), these applications are not taken into account when the base station 5-1 configures the RRC parameters for this mobile telephone 3-2.

In this example however, the base station 5-1 broadcasts (or communicates to the mobile telephone 3-2 in another suitable way) a request that it needs information regarding the power consumption state of this mobile telephone 3-2 (or that of each mobile telephone 3 served by this base station 5-1).

Therefore, the mobile telephone 3-2, upon detecting a change in its power consumption state, generates a power consumption state report for sending to the serving base station 5-1. In case the mobile telephone 3-2 is still in the RRC Idle mode, the generated power consumption state report is sent to the network after the mobile telephone 3-2 generates and sends an RRC connection request message to the serving base station 5-1. The base station 5-1 then provides the necessary configuration for the mobile telephone 3-2 to be able to communicate with the network, which causes the mobile telephone 3-2 to transition from RRC idle mode to RRC connected mode. Next, the mobile telephone 3-2 transmits, to the network, information identifying its current power consumption state (e.g. default, optimised, normal, medium, or high power consumption state) using a suitable RRC message, such as a message confirming to the base station 5-1 that the RRC connection setup is complete.

The transmitted information allows the network to reconfigure the RRC parameters used by this mobile telephone 3-2 accordingly. For example, the network may instruct this mobile telephone 3-2 to change its DRX/DTX configuration, or change its connection release timing (i.e. set inactivity timers T1 to T3) in dependence of the indicated power consumption state.

Advantageously, in the embodiments that will be described in more detail below, the mobile telephone 3 provides assistance information to the base station 5 currently serving the mobile telephone 3, if possible, whenever there is a change in its mobility state and/or its power consumption state. In this way, optimised battery usage can be achieved without compromising on support for mobility and/or the ability to send/ receive data by applications installed on the mobile telephone 3.

### (Mobile Telephone)

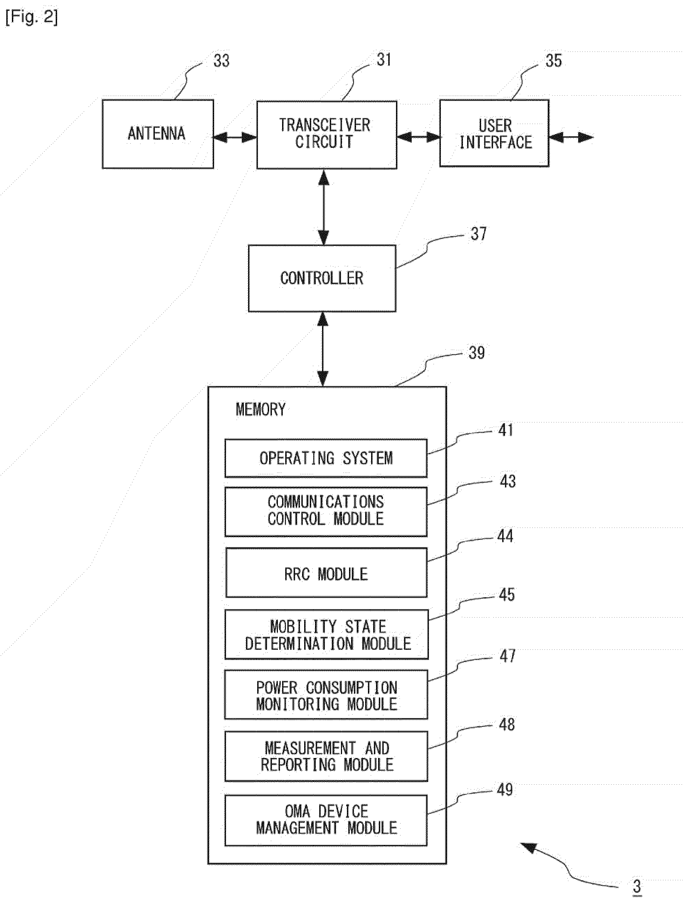

Fig. 2 is a block diagram illustrating the main components of the mobile telephone 3 shown in Fig. 1.

As shown, the mobile telephone 3 includes a transceiver circuit 31 which transmits signals to, and receives signals from, the base station 5 via antenna 33. The operation of the transceiver circuit 31 is controlled by a controller 37 in accordance with software stored in memory 39. The software includes, among other things, an operating system 41, a communications control module 43, a radio resource control module 44, a mobility state determination module 45; a power consumption monitoring module 47, a measurement and reporting module 48; and an open mobile alliance device management module 49.

The communications control module 43 controls communication with the base station 5 including, for example, allocation of resources to be used by the transceiver circuit 31 in its communications with the base station 5.

The radio resource control module 44 controls the transition between various RRC modes and handles associated RRC signalling to/from the base station 5.

The power consumption monitoring module 47 monitors applications running on the mobile telephone 3 and determines a current and/or desired power consumption state accordingly.

The measurement and reporting module 48 performs signal measurements according to measurement events configured by the base station 5. The measurement and reporting module 48 also generates and sends measurement reports to the configuring base station 5.

The open mobile alliance device management module 49 is operable to interface with the OMA DM entity 13 in the core network 7 for receiving and storing configuration parameters for the provision of information related to the operating state of the mobile telephone 3.

### (Base station)

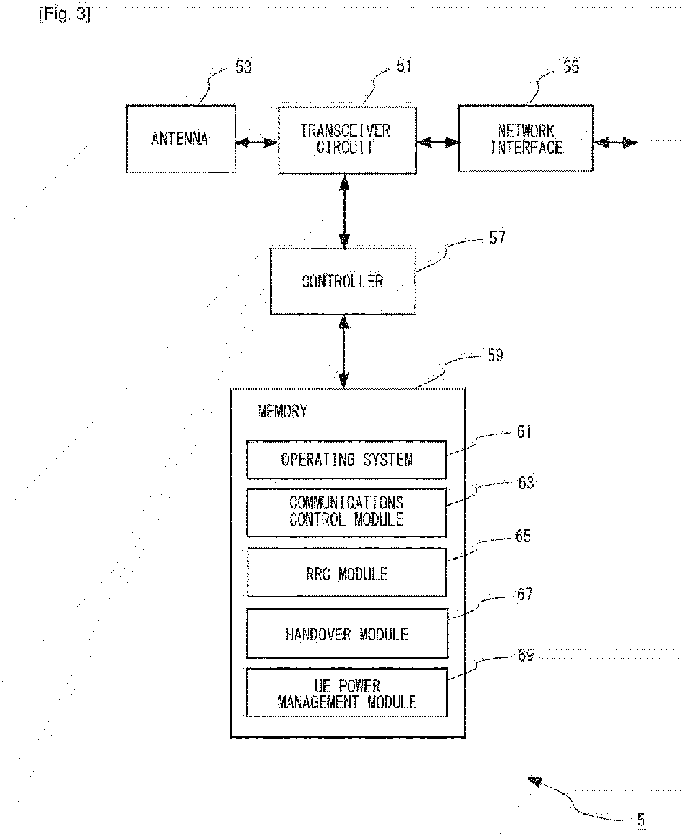

Fig. 3 is a block diagram illustrating the main components of a donor base station 5. The base station 5 is a fixed communications node providing services to user equipment 3 within its coverage area. As shown, the base station 5 includes a transceiver circuit 51 which transmits signals to, and receives signals from, the mobile telephone 3 via at least one antenna 53. The base station 5 also transmits signals to and receives signals from the core network 7 and other neighbouring base stations 5 via a network interface 55 (for communicating with neighbouring base stations 5 and with the core network 7). The operation of the transceiver circuit 51 is controlled by a controller 57 in accordance with software stored in memory 59. The software includes, among other things, an operating system 61, a communications control module 63, a radio resource control module 65, a handover module 67, and a user equipment power management module 69.

The communications control module 63 controls communications between the base station 5 and the mobile telephones 3, and the network devices such as the MME 9, the HSS 11, and the OMA DM 13.

The radio resource control module 65 controls the radio communication resources used between the base station 5 and the mobile telephones 3 attached thereto.

The handover module 67 configures measurements for the mobile telephones 3 to be carried out in relation to handover to another cell. The handover module 67 also configures mobility state and/or power consumption state reporting for the attached mobile telephones 3.

The user equipment power management module 69 configures operation modes for the attached mobile telephones 3 (e.g. usage and parameters of DRX/DTX modes, connection release timers, RRC inactivity timers), in dependence of the mobility state and/or power consumption state reported by each mobile telephone 3.

In the above description, the mobile telephone 3 and the base station 5 are described for ease of understanding as having a number of discrete modules (such as the communications control modules and the operation and maintenance modules). Whilst these modules may be provided in this way for certain applications, for example where an existing system has been modified to implement the invention, in other applications, for example in systems designed with the inventive features in mind from the outset, these modules may be built into the overall operating system or code and so these modules may not be discernible as discrete entities. These modules may also be implemented in software, hardware, firmware or a mix of these.

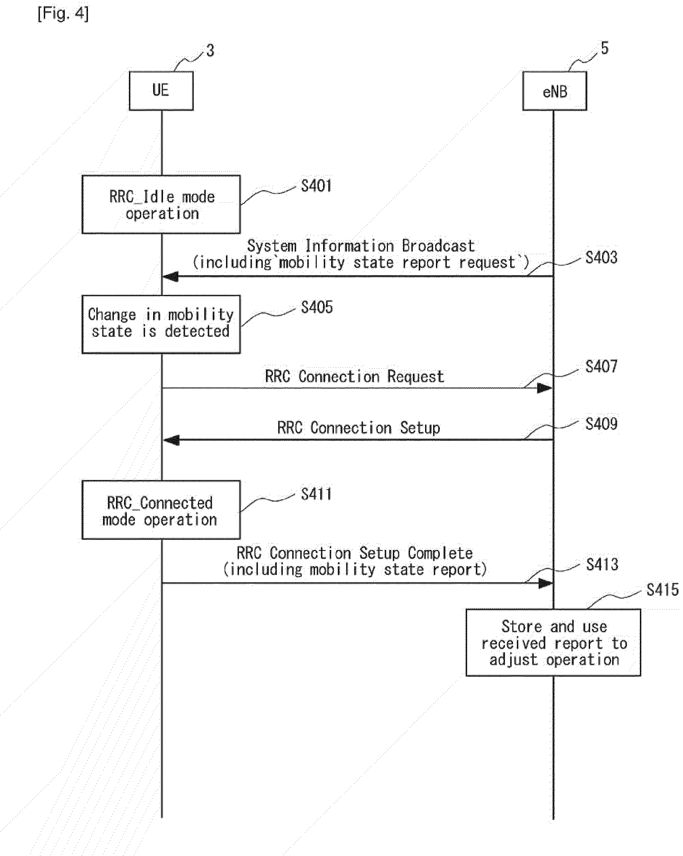

A number of different embodiments will now be described that illustrate how different aspects of the invention can be put into effect using the above mobile telephone 3 and base station 5. The embodiments will be described with reference to the flow charts shown in Figs. 4 to 6.

### (Operation)

### (First Embodiment - mobility state reporting at RRC connection setup)

Fig. 4 shows an example timing diagram illustrating a method performed by components of the communication system 1 when reporting a change in the mobility state of a mobile telephone 3.

In this embodiment, initially, as shown in step s401, the mobile telephone 3 is operating in the RRC Idle mode. Next, in step s403, it receives a mobility state report request from the base station 5, e.g. as part of the system information that is being broadcast by this base station 5 within its cell(s).

Accordingly, in step s405, when the mobility state determination module 45 detects a change in the mobile telephone's 3 mobility state, it generates a mobility state report for sending to the network as soon as an RRC connection is established. In step 407, the RRC module 44 initiates an RRC connection with the network by generating and sending (via the transceiver circuit 31) an 'RRC connection Request' message to the base station 5. In response to this, the base station 5 provides the necessary RRC parameters by sending, in step s409, an 'RRC Connection Setup' message back to the mobile telephone 3.

In step s411, using the received RRC parameters, the mobile telephone 3 transitions into RRC connected mode operation, by changing the operation of its RRC module 44 accordingly. The RRC connected mode enables the mobile telephone 3 to send or receive data to/from the base station 5.

Therefore, in step s413, the RRC module 44 generates and sends, to the base station 5, an 'RRC Connection Setup Complete' message, and also includes in this message the mobility state report generated by the mobility state determination module 45 in step s405.

Finally, in step s415, the base station 5 stores the received mobility state report, and makes it available to its RRC module 65, handover module 67, and UE power management module 69 to adjust their operation accordingly.

Advantageously, the RRC module 65 selects new inactivity timers for this particular mobile telephone 3, by taking into account the reported mobility state. Optionally, the base station 5 may share the received mobility state information with a further network node via its network interface 55 (e.g. with a neighbouring base station using the X2 interface).

As discussed above, an idle mobile telephone can estimate its mobility by counting the number of serving cell changes in a given period of time and classify itself as either being in a normal, medium, or high mobility state. Advantageously, in this example, the base station broadcasts a request as part of the system information, which instructs the mobile telephone currently operating in the RRC Idle mode to report its mobility state to the network.

### (Second Embodiment - power consumption state reporting at RRC connection setup phase (does not form part of the claimed invention))

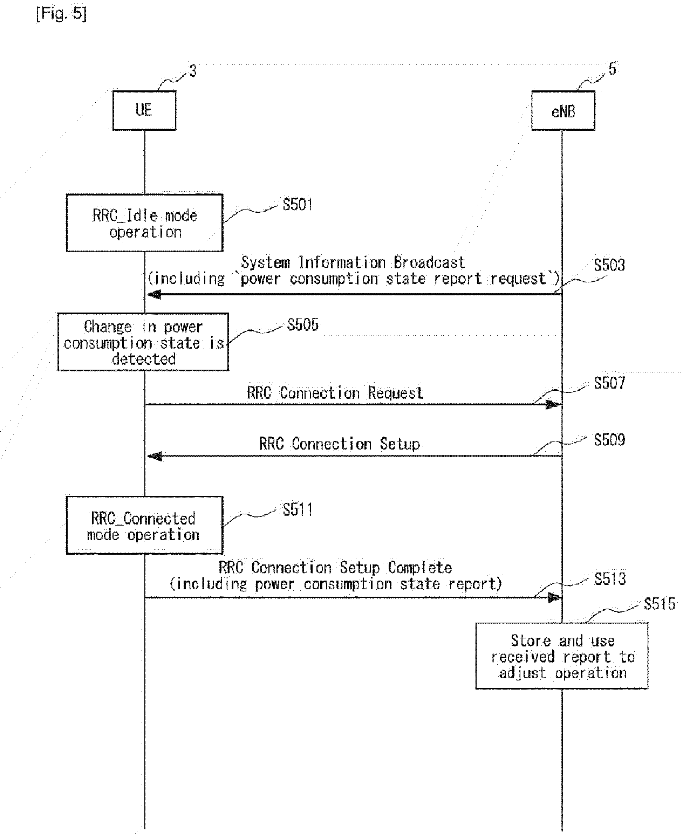

Fig. 5 shows an example timing diagram illustrating a method performed by components of the communication system 1 when reporting a change in the power consumption state of a mobile telephone 3.

This embodiment generally follows the first embodiment, however, instead of mobility state reporting, power consumption state reporting is performed.

Initially, as shown in step s501, the mobile telephone 3 is operating in the RRC Idle mode. Next, in step s503, it receives a power consumption state report request from the base station 5, e.g. as part of the system information that is being broadcast by this base station 5 within its cell(s).

Accordingly, in step s505, when the power consumption monitoring module 47 detects a change in the mobile telephone's 3 power consumption state, it generates a power consumption state report for sending to the network as soon as an RRC connection is available. If an RRC connection is not already established, the RRC module 44, in step 507, generates and sends (via the transceiver circuit 31) an 'RRC connection Request' message to the base station 5. In response to this, the base station 5 provides the necessary RRC parameters by sending, in step s509, an 'RRC Connection Setup' message back to the mobile telephone 3.

In step s511, using the received RRC parameters, the mobile telephone 3 transitions into RRC connected mode operation, by changing the operation of its RRC module 44 accordingly. The RRC connected mode enables the mobile telephone 3 to send or receive data to/from the base station 5.

Therefore, in step s513, the RRC module 44 generates and sends, to the base station 5, an 'RRC Connection Setup Complete' message, and also includes in this message the power consumption state report generated by the power consumption monitoring module 47 in step s505.

Finally, in step s515, the base station 5 stores the received power consumption state report, and makes it available to its RRC module 65, handover module 67, and UE power management module 69 to adjust their operation accordingly.

Advantageously, in this embodiment, the UE power management module 69 selects new operating parameters for this particular mobile telephone 3, by taking into account the reported power consumption state. For example, the UE power management module 69 might instruct the RRC module 65 to initiate a DRX/DTX mode operation for this mobile telephone 3. If this particular mobile telephone 3 is already operating in the DRX/DTX mode, the RRC module 65 might adjust the duty cycle so that further power savings can be achieved.

Optionally, the base station 5 may share the received power consumption state information with a further network node via its network interface 55 (e.g. with a neighbouring base station using the X2 interface).

Advantageously, by broadcasting a request as part of the system information, the mobile telephone can be instructed to report its power consumption state to the network.

### (Third Embodiment - mobility state reporting using the RRC measurement procedure (does not form part of the claimed invention))

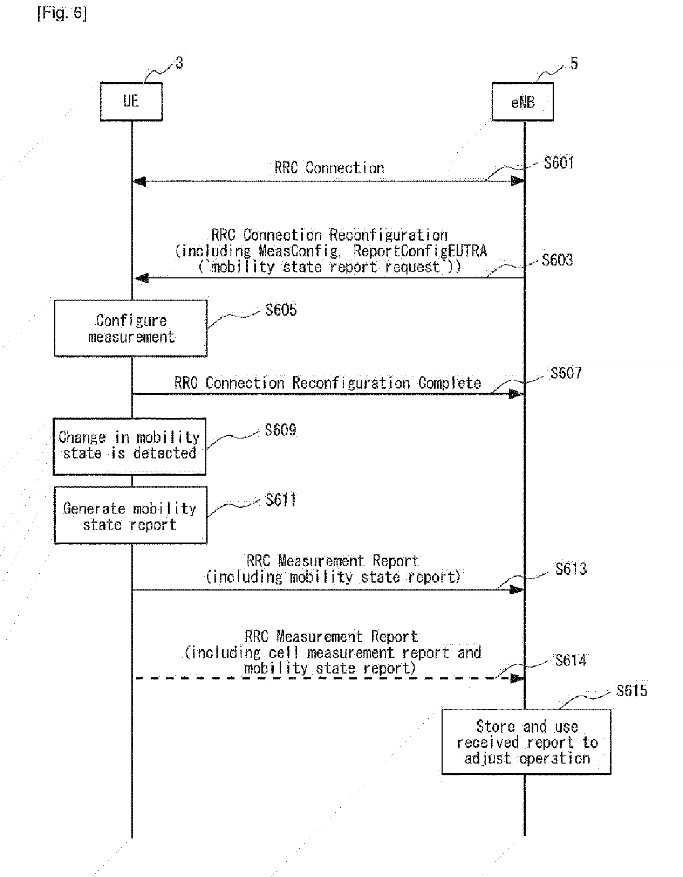

Fig. 6 shows an example timing diagram illustrating another method performed by components of the communication system 1 when reporting a change in the mobility state of a mobile telephone 3.

In this example, as shown in step s601, the mobile telephone 3 is already operating in the RRC connected mode and is exchanging data with e.g. other user equipment or a network node via a cell of the serving base station 5.

In step s603, the base station's handover module 67 generates and sends (via the transceiver circuit 51) an 'RRC Connection Reconfiguration' message to the mobile telephone 3. This message requests the mobile telephone 3 to perform measurements in relation to determining the timing of a handover to another base station. It does this by including in this message a 'MeasConfig' information element (IE), which specifies the kind of measurements and the conditions under which the measurements need to be initiated by the mobile telephone 3. In particular, the 'MeasConfig' IE includes measurement parameters for at least one of the event types (i.e. Events A1 to A6, B1, and B2) as specified in the 3GPP TS 36.331 v10.5.0 standard. Such parameters may specify, for example, a threshold signal level for a current serving cell, below which signal level the mobile telephone 3 will start the configured measurements. This will effectively result in the mobile telephone 3 performing a search for other base station cells to which it can be handed over when it is experiencing a degradation in signal quality within the current cell (e.g. due to the mobile telephone 3 moving away from the current base station 5).

In this example, however, the 'RRC Connection Reconfiguration' message also includes a mobility state request for the mobile telephone 3, which is embedded in e.g. a 'ReportConfigEUTRA' IE within the 'RRC Connection Reconfiguration' message.

In response to receiving this RRC Connection Reconfiguration message, the mobile telephone 3 configures, in step s605, its measurement and reporting module 48 in accordance with the received 'MeasConfig' IE and starts monitoring whether or not a condition defined therein is met. The mobile telephone 3 also configures its mobility state determination module 45 to monitor and report any change in the mobile telephone's 3 mobility state.

Then, in step s607, the mobile telephone 3 confirms that the configuration has been successful by generating and sending an 'RRC Connection Reconfiguration Complete' message to the base station 5.

When the mobility state determination module 45 detects, in step s609, a change in the mobile telephone's 3 mobility state (e.g. due to the number of cell changes within the period specified by the TCRmax timer has changed), it proceeds to step s611 and generates a mobility state report according to the 'ReportConfigEUTRA' IE provided earlier by the base station 5.

Once the report is generated, the measurement and reporting module 48 generates and sends a measurement report, in step s613, to the base station 5 in an 'RRC Measurement Report' message. This measurement report includes the mobility state report generated in step s611. Optionally, as shown in step s614, this measurement report might also include the results of any cell measurements that the mobile telephone 3 has performed based on the received MeasConfig IE.

After the base station 5 has received the Measurement Report, it stores the received mobility state report, in step s615, and makes it available to its RRC module 65, handover module 67, and UE power management module 69 to adjust their operation accordingly.

Advantageously, the mobile telephone 3 reports its changed mobility state to the network as part of the radio measurement procedure, i.e. without unnecessary delay or without requiring a dedicated procedure to be initiated for the mobility state reporting. Consequently, this solution saves valuable system resources.

### (Fourth Embodiment - power consumption state reporting using the RRC measurement procedure (does not form part of the claimed invention))

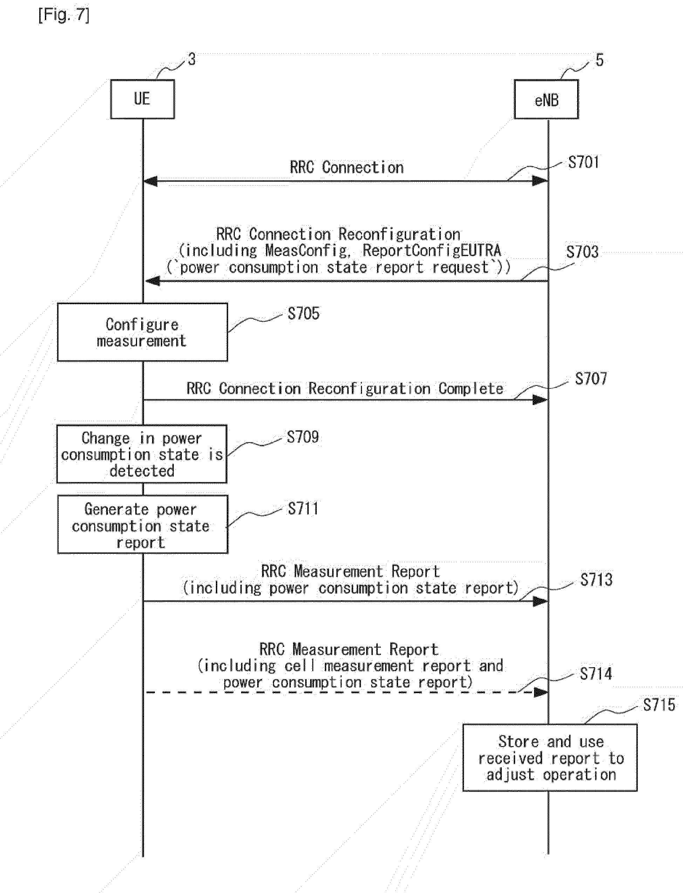

Fig. 7 shows an example timing diagram illustrating another method performed by components of the communication system 1 when reporting a change in the power consumption state of a mobile telephone 3. This example is similar to the one discussed above with reference to Fig. 6, however, instead of mobility state, power consumption state is reported.

As shown in step s701, the mobile telephone 3 is already operating in the RRC connected mode and is exchanging data with e.g. other user equipment or a network node via a cell of the serving base station 5.

In step s703, the base station's handover module 67 generates and sends (via the transceiver circuit 51) an 'RRC Connection Reconfiguration' message to the mobile telephone 3. This message requests the mobile telephone 3 to perform measurements in relation to determining the timing of a handover to another base station. It does this by including in this message a 'MeasConfig' information element (IE), as discussed above. In this example, however, the 'RRC Connection Reconfiguration' message also includes a power consumption state request for the mobile telephone 3, which is embedded in e.g. a 'ReportConfigEUTRA' IE within the 'RRC Connection Reconfiguration' message.

In response to receiving this RRC Connection Reconfiguration message, the mobile telephone 3 configures, in step s705, its measurement and reporting module 48 in accordance with the received 'MeasConfig' IE and starts monitoring whether or not a condition defined therein is met. The mobile telephone 3 also configures its power consumption monitoring module 47 to monitor and report any change in the mobile telephone's 3 power consumption state.

Then, in step s707, the mobile telephone 3 confirms that the configuration has been successful by generating and sending an 'RRC Connection Reconfiguration Complete' message to the base station 5.

When the power consumption monitoring module 47 detects, in step s709, a change in the mobile telephone's 3 power consumption state (e.g. due to an application being turned on/off or an uplink/downlink transmit queue being emptied), it proceeds to step s711 and generates a power consumption state report according to the 'ReportConfigEUTRA' IE provided earlier by the base station 5.

Once the report is generated, the measurement and reporting module 48 generates and sends a measurement report, in step s713, to the base station 5 in an 'RRC Measurement Report' message. This measurement report includes the power consumption state report generated in step s711. Optionally, as shown in step s714, this measurement report might also include the results of any cell measurements that the mobile telephone 3 has performed based on the received MeasConfig IE.

After the base station 5 has received the Measurement Report, it stores the received power consumption state report, in step s715, and makes it available to its RRC module 65, handover module 67, and UE power management module 69 to adjust their operation accordingly.

Advantageously, the mobile telephone 3 reports its changed power consumption state to the network as part of the radio measurement procedure, i.e. without unnecessary delay or without requiring a dedicated procedure to be initiated for the power consumption state reporting.

### (Fifth Embodiment - subscription dependent mobility state and/or power consumption state reporting (does not form part of the claimed invention))

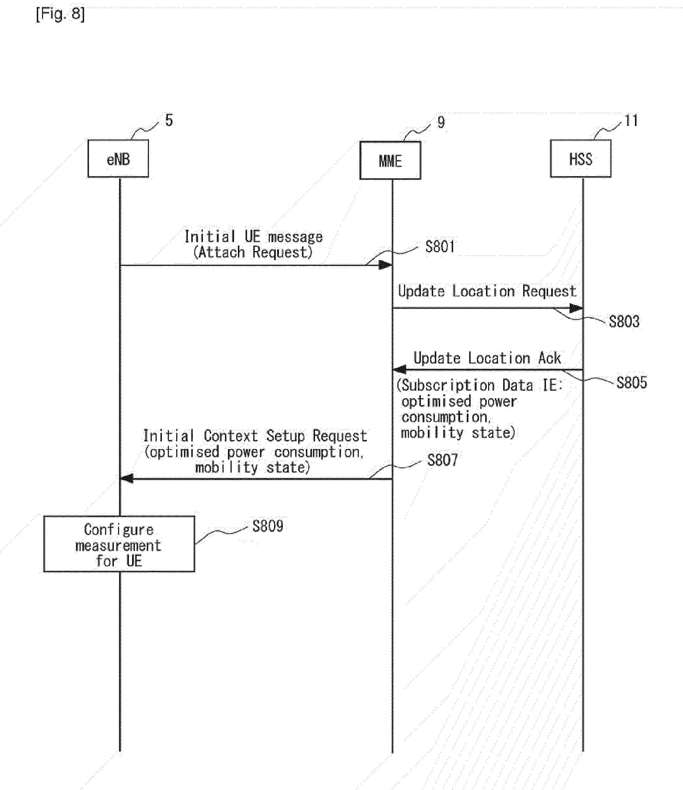

Fig. 8 shows an example timing diagram illustrating a method performed by components of the communication system 1 when exchanging optimised power consumption and/or mobility configuration between the home subscriber server 11 and the serving base station 5.

In the communication system 1 illustrated on Fig. 1, some mobile telephones 3 might not support mobility state and/or power consumption state reporting and related optimisation. Therefore, before configuring such reporting, i.e. before performing step s603 or s703, the base station 5 might advantageously verify whether or not a particular mobile telephone 3 supports this feature.

Table 1 illustrates some of the information stored in the home subscriber server 11 for each mobile telephone 3. In particular, information related to the UE context and whether or not optimized power consumption and/or mobility state reporting is supported is stored in the HSS 11 as follows:

### Table1

**Table 1: UE context in HSS**

| **Field** | **Description** |
|---|---|
| International Mobile Subscriber Identity (IMSI) | IMSI is the main reference key. |
| ··· | ··· |
| Optimized power consumption | Whether the UE can be configured for optimized power consumption |
| Mobility state | Whether UE can be configured for mobility state handling |

Table 2 illustrates some of the information stored in the Mobility Management Entity 9 for each mobile telephone 3. In particular, information related to the UE context and whether or not optimized power consumption and/or mobility state reporting is supported is stored in the MME 9 as follows:

### Table2

**Table 2: UE context in MME**

| **Field** | **Description** |
|---|---|
| IMSI | IMSI is the main reference key |
| ··· | ··· |
| Optimized power consumption | Whether the UE can be configured for optimized power consumption |
| Mobility state | Whether UE can be configured for mobility state handling |

In this example, the base station 5 generates and sends, to the MME 9, an 'Initial UE Message', which includes an 'Attach Request' received from one of the mobile telephones (not shown) served by this base station 5. Such 'Attach Request' is typically generated by the mobile telephone upon first transitioning from RRC Idle to RRC Connected state, and is transmitted towards the core network 7 within an RRC Connection Setup Complete message sent to the base station 5.

When the MME 9 receives the 'Attach Request', it generates and sends, in step s803, an 'Update Location Request' to the HSS 11. This message informs the HSS 11 about the mobile telephone's new location, i.e. its current serving base station / cell.

In response to this, the HSS retrieves from its UE context table the relevant subscription data for optimised power consumption and/or mobility state for the particular mobile telephone that provided the 'Attach Request'. The HSS 11 also generates and sends, in step s805, an 'Update LocationAck' message to the MME 9, and includes in this message an indication whether or not power consumption and/or mobility state reporting is supported by this mobile telephone. The HSS 11 includes this indication in e.g. a 'Subscription Data' IE embedded in the 'Update Location Ack' message.

Next, in step s807, the MME 9 generates and sends, to the serving base station 5, an 'Initial Context Setup Request' message, and includes in this message the received 'Subscription Data' IE comprising the indication whether or not power consumption and/or mobility state reporting is supported by the particular mobile telephone. At this step, the MME 9 might also update its own UE context table if necessary.

In step s809, after the base station 5 has received the indication (included in the 'Subscription Data' IE) from the MME 9, it configures measurements and reporting for the mobile telephone accordingly. For example, if the received indication indicates that the particular mobile telephone supports mobility state reporting, the base station 5 proceeds to step s603 of Fig. 6. Alternatively, if the received indication indicates that the particular mobile telephone supports power consumption state reporting, the base station 5 proceeds to step s703 of Fig. 7.

Advantageously, in this example, unnecessary configuration of reporting can be avoided by the base station 5 for those mobile telephones that do not support this feature.

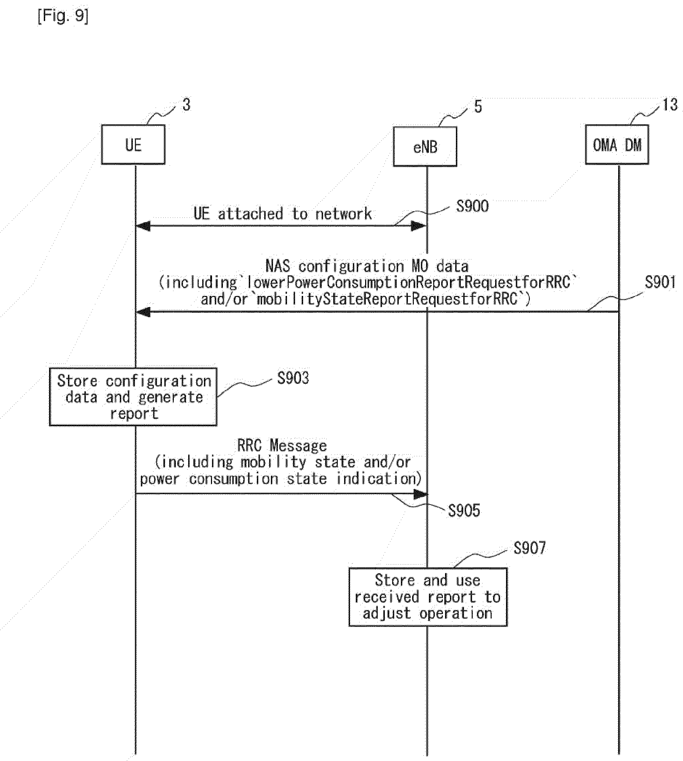

[Sixth Embodiment - mobility state and/or power consumption state reporting configured using non access stratum signalling [does not form part of the claimed invention]] Fig. 9 shows an example timing diagram illustrating a further method performed by components of the communication system 1 when reporting a change in the mobility state and/or power consumption state of a mobile telephone 3. In this example, an OMA DM entity 13 (e.g. an application) configures the mobile telephone to report its mobility state and power consumption state.

Initially, in step s900, the mobile telephone 3 is attached to the network (either in RRC idle or RRC connected mode) via the base station 5.

In step s901, the OMA DM entity 13 generates and sends, via the base station 5, a non-access stratum (NAS) configuration message to the mobile telephone 3. The OMA DM entity 13 includes in this message, e.g. in the 'NAS configuration MO data' message shown in Fig. 9, a mobility state request and/or power consumption state request in an information element, such as the 'lowerPowerConsumptionReportRequestforRRC' IE and/or the 'mobilityState-ReportRequestforRRC' IE, respectively. This message informs the mobile telephone 3 that it is allowed to report on its power consumption state and mobility state to the serving base station 5. Optionally, the OMA DM entity 13 might also indicate a time periodicity for reporting the mobile telephone's 3 mobility state and/or power consumption state, using a suitable information element, such as a 'periodicityForlowerPowerConsumptionReportforRRC' IE and/or a 'penodicityFormobilityStateReportforRRC' IE, respectively. Optionally, the OMA DM entity 13 might also indicate a condition for reporting the mobile telephone's 3 mobility state and/or power consumption state, using an information element, such as a 'conditionForlowerPowerConsumptionReportforRRC' IE and/or a 'conditionFormobilityStateReportforRRC' IE, respectively. Such condition might include e.g. an update of the mobility state and/or power consumption state.

Therefore, in step s903, the OMA DM module 49 of the mobile telephone 3 receives, and stores in memory 39 the received mobility state request and/or power consumption state request. The OMA DM module 49 also instructs the mobility state determination module 45 and/or the power consumption monitoring module 47 to generate an appropriate mobility state report and/or power consumption report, respectively. As specified by the received 'lowerPowerConsumptionReportRequestforRRC' IE and/or 'mobilityStateReport-RequestforRRC' IE and/or 'periodicityForlowerPowerConsumptionReportforRRC' IE and/or 'periodicityFormobilityStateReportforRRC' IE and/or 'conditionForlower-PowerConsumptionReportforRRC' IE and/or 'conditionFormobilityStateReport-forRRC' IE, this report might be generated either immediately upon receiving the request(s), only upon a change in the mobility state and/or power consumption state of the mobile telephone 3, or periodically.

Next, in step s905, the RRC module 44 generates and sends, to the base station 5, an RRC message, and includes in this message the mobility state report and/or power consumption report generated in step s903.

Finally, in step s907, the base station 5 stores the received power consumption state report and makes it available to its RRC module 65, handover module 67, and UE power management module 69 to adjust their operation accordingly.

Advantageously, the mobile telephone's 3 NAS layer interfaces with the RRC module 44 to generate and provide an appropriate mobility state report and/or power consumption report to the network, based on the configuration provided by the OMA DM entity 13. Such configuration might include a time period for the sending of the mobility state and/or power consumption state report. Such configuration might include a condition for the sending the mobility state and/or power consumption state report(s). Therefore, in this example, there is no need for the base station 5 to generate a configuration for the mobile telephone's 3 a mobility state report and/or power consumption report.

### (Modifications and Alternatives)

Detailed embodiments have been described above. As those skilled in the art will appreciate, a number of modifications and alternatives can be made to the above embodiments whilst still benefiting from the inventions embodied therein. In other words, it will be understood by those of ordinary skill in the art that various changes in form and details may be made therein without departing from the scope of the present invention as defined by the claims.

Although in Figs. 6 and 7 it is shown that the base station requests the mobile telephone to report changes in its mobility state and/or power consumption state by sending an RRC Connection Reconfiguration message, it will be appreciated that other messages may be used. For example, the network might use a System Information Block (SIB) message to transmit the mobility state request and/or power consumption report request to the mobile telephone. In this case, the mobile telephone reports its mobility state and/or power consumption state in an SIB response message.

Various embodiments have been described in which the mobile telephone generates and sends a mobility state and/or power consumption state report upon detecting a change in its respective mobility state and/or power consumption state. However, it will be appreciated that such mobility state and/or power consumption state report might be generated and/or sent by the mobile telephone to the base station periodically, even if a change in the mobile telephone's mobility state and/or power consumption state is not detected.

Moreover, it has been described above that the mobility state request and/or power consumption report request is included in a ReportConfigEUTRA information element. However, it will be appreciated that such request(s) might be included in any other suitable information element, such as the MeasConfig IE, or any other existing or dedicated information element. It will be further appreciated that such request(s) might be transmitted from the base station to the mobile telephone in any part (e.g. a header, payload, etc) of a suitable message. Such messages might be addressed and sent to a single mobile telephone, or sent to a group of mobile telephones, or sent to all mobile telephones (including idle and connected ones) served by this base station.

Although the procedures for mobility state reporting and power consumption state reporting have been described as being performed separately (e.g. separate timing diagrams of Figs. 6 and 7), it will be appreciated that these procedures might be combined. Consequently, steps s403 and s503, steps s413 and s513, s603 and s703, s613 and s713, s614 and s714 might be combined, respectively. This modification significantly reduces the signalling required between the base station and the mobile telephone.

As shown in Fig. 8, the Subscription Data information element originates from the HSS (i.e. at step s805). However, it will be appreciated that in the absence of this information element, the MME might also generate and add this information element, at step s807, using its own UE context table.

In the above embodiments, a mobile telephone based telecommunications system was described. As those skilled in the art will appreciate, the signalling techniques described in the present application can be employed in other communications system. Other communications nodes or devices may include user devices such as, for example, personal digital assistants, laptop computers, web browsers, etc. As those skilled in the art will appreciate, it is not essential that the above described system be used for mobile communications devices. The system can be used in a network having one or more fixed computing devices as well as or instead of the mobile communicating devices.

In the above description, the base station and the mobile telephone are described, for ease of understanding, as having a number of discrete modules. Whilst these modules may be provided in this way for certain applications, for example where an existing system has been modified to implement the invention, in other applications, for example in systems designed with the inventive features in mind from the outset, these modules may be built into the overall operating system or code and so these modules may not be discernible as discrete entities. These modules may also be implemented in software, hardware, firmware or a mix of these.

Whilst the signalling messages described herein that include the measurement results are advantageous in terms of simplicity, ease of implementation and minimising the number of messages required, this information may be sent in any of a number of different ways, e.g. in multiple messages. Moreover, instead of modifying the described signalling messages, completely new messages may be generated which include the measurement results.

In the embodiments described above, the mobile telephone and the base station will include transceiver circuitry. Typically this circuitry will be formed by dedicated hardware circuits. However, in some embodiments, part of the transceiver circuitry may be implemented as software run by the corresponding controller.

In the above embodiments, a number of software modules were described. As those skilled in the art will appreciate, the software modules may be provided in compiled or un-compiled form and may be supplied to the base station or the relay station as a signal over a computer network, or on a recording medium. Further, the functionality performed by part or all of this software may be performed using one or more dedicated hardware circuits.

Further, it is possible to provide a computer program which causes a programmable computer device to become configured as the above-mentioned mobile telephone. Similarly, it is possible to provide a computer program which causes a programmable computer device to become configured as the above-mentioned base station. The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM, CD-R, CD-R/W, and semiconductor memories (such as mask ROM, PROM (Programmable ROM), EPROM (Erasable PROM), flash ROM, RAM (Random Access Memory), etc.). The software modules may be provided to a computer using any type of transitory computer readable media. Examples of transitory computer readable media include electric signals, optical signals, and electromagnetic waves. Transitory computer readable media can provide the software modules to a computer via a wired communication line (e.g. electric wires, and optical fibers) or a wireless communication line.

Various other modifications will be apparent to those skilled in the art and will not be described in further detail here.

### Reference Signs List

1 TELECOMMUNICATION SYSTEM
3 (3-1 to 3-4) MOBILE TELEPHONE
5 (5-1, 5-2) BASE STATION
7 CORE NETWORK
9 MOBILITY MANAGEMENT ENTITY
11 HOME SUBSCRIBER SERVER
13 OPEN MOBILE ALLIANCE DEVICE MANAGEMENT
31 TRANSCEIVER CIRCUIT
33 ANTENNA
35 USER INTERFACE
37 CONTROLLER
39 MEMORY
41 OPERATING SYSTEM
43 COMMUNICATIONS CONTROL MODULE
44 RADIO RESOURCE CONTROL MODULE
45 MOBILITY STATE DETERMINATION MODULE
47 POWER CONSUMPTION MONITORING MODULE
48 MEASUREMENT AND REPORTING MODULE
49 OPEN MOBILE ALLIANCE DEVICE MANAGEMENT MODULE
51 TRANSCEIVER CIRCUIT
53 ANTENNA
55 NETWORK INTERFACE
57 CONTROLLER
59 MEMORY
61 OPERATING SYSTEM
63 COMMUNICATIONS CONTROL MODULE
65 RADIO RESOURCE CONTROL MODULE
67 HANDOVER MODULE
69 USER EQUIPMENT POWER MANAGEMENT MODULE

## Claims

1. A method performed by a user equipment configured to operate in an RRC-IDLE state comprising:
receiving (S403), while operating in RRC-IDLE state (S401), system information broadcasted from a base station,
wherein the system information includes a request for reporting a mobility state of the user equipment;
after the request is received and a change of the mobility state is detected, establishing (S407, S409) an RRC connection with the base station; and
transmitting (S413), to the base station, the mobility state in an RRC Connection setup complete message.

2. A method performed by a base station comprising:
broadcasting (S403) system information to a user equipment operating in an RRC-IDLE state,
wherein the system information includes a request for reporting a mobility state of the user equipment;
receiving (S407), from the user equipment, an RRC Connection Request message;
transmitting (S409) an RRC Connection setup message in response to the RRC Connection Request message; and
receiving (S413), from the user equipment operating in an RRC-CONNECTED state, the mobility state in an RRC Connection setup complete message.

3. A user equipment configured to operate in an RRC-IDLE state comprising:
means for receiving, while operating in RRC-IDLE state, system information broadcasted from a base station,
wherein the system information includes a request for reporting a mobility state of the user equipment;
wherein after the request is received and a change of the mobility state is detected, the user equipment is configured to establish an RRC connection with the base station; and
means for transmitting, to the base station, the mobility state in an RRC Connection setup complete message.

4. A base station comprising:
means for broadcasting system information to a user equipment operating in an RRC-IDLE state,
wherein the system information includes a request for reporting a mobility state of the user equipment;
means for receiving, from the user equipment, an RRC Connection Request message;
means for transmitting an RRC Connection setup message in response to the RRC Connection Request message; and
means for receiving, from the user equipment operating in an RRC-CONNECTED state, the mobility state in an RRC Connection setup complete message.

## Patentansprüche

1. Verfahren, das durch ein Benutzergerät ausgeführt wird, das dafür konfiguriert ist, in einem RRC-IDLE-Zustand betrieben zu werden, mit den Schritten:
Empfangen (S403) von Systeminformation, die von einer Basisstation rundgesendet wird, während eines Betriebs in einem RRC-IDLE-Zustand (S401),
wobei die Systeminformation eine Anforderung zum Melden eines Mobilitätszustands des Benutzergeräts aufweist;
Einrichten (S407, S409) einer RRC-Verbindung mit der Basisstation, nachdem die Anforderung empfangen und eine Änderung des Mobilitätszustands erfasst wurde; und
Übertragen (S413) des Mobilitätszustands in einer RRC-Verbindungsaufbauabschlussnachricht an die Basisstation.

2. Verfahren, das durch eine Basisstation ausgeführt wird, mit den Schritten:
Rundsenden (S403) von Systeminformation an ein Benutzergerät, das in einem RRC-IDLE-Zustand betrieben wird,
wobei die Systeminformation eine Anforderung zum Melden eines Mobilitätszustands des Benutzergeräts aufweist;
Empfangen (S407) einer RRC-Verbindungsanforderungsnachricht vom Benutzergerät;
Übertragen (S409) einer RRC-Verbindungsaufbaunachricht in Antwort auf die RRC-Verbindungsanforderungsnachricht; und
Empfangen (S413) des Mobilitätszustands in einer RRC-Verbindungsaufbauabschlussnachricht vom Benutzergerät, das in einem RRC-CONNECTED-Zustand betrieben wird.

3. Benutzergerät, das für einen Betrieb in einem RRC-IDLE-Zustand konfiguriert ist, mit:
einer Einrichtung zum Empfangen von Systeminformation, die von einer Basisstation übertragen wird, während eines Betriebs im RRC-IDLE-Zustand,
wobei die Systeminformation eine Anforderung zum Melden eines Mobilitätszustands des Benutzergeräts aufweist, wobei, nachdem die Anforderung empfangen und eine Änderung des Mobilitätszustands erfasst wurde, das Benutzergerät dafür konfiguriert ist, eine RRC-Verbindung mit der Basisstation einzurichten; und
einer Einrichtung zum Übertragen des Mobilitätszustands in einer RRC-Verbindungsaufbauabschlussnachricht an die Basisstation.

4. Basisstation, mit:
einer Einrichtung zum Rundsenden von Systeminformation an ein Benutzergerät, das in einem RRC-IDLE-Zustand betrieben wird,
wobei die Systeminformation eine Anforderung zum Melden eines Mobilitätszustands des Benutzergeräts aufweist;
einer Einrichtung zum Empfangen einer RRC-Verbindungsanforderungsnachricht vom Benutzergerät;
einer Einrichtung zum Übertragen einer RRC-Verbindungsaufbaunachricht in Antwort auf die RRC-Verbindungsanforderungsnachricht; und
einer Einrichtung zum Empfangen des Mobilitätszustands in einer RRC-Verbindungsaufbauabschlussnachricht von dem in einem RRC-CONNECTED-Zustand betriebenen Benutzergerät.

## Revendications

1. Procédé réalisé par un équipement utilisateur configuré pour fonctionner dans un état inactif RRC, comprenant:
la réception (S403), tout en fonctionnant dans un état inactif RRC (S401), d'informations de système diffusées à partir d'une station de base,
dans lequel les informations de système comportent une demande pour rapporter un état de mobilité de l'équipement utilisateur;
après que la demande est reçue et qu'un changement de l'état de mobilité est détecté, l'établissement (S407, S409) d'une connexion RRC avec la station de base; et
la transmission (S413), à la station de base, de l'état de mobilité dans un message d'achèvement d'établissement de connexion RRC.

2. Procédé réalisé par une station de base, comprenant:
la diffusion (S403) d'informations de système à un équipement utilisateur fonctionnant dans un état inactif RRC,
dans lequel les informations de système comportent une demande pour rapporter un état de mobilité de l'équipement utilisateur;
la réception (S407), à partir de l'équipement utilisateur, d'un message de demande de connexion RRC;
la transmission (S409) d'un message d'établissement de connexion RRC en réponse au message de demande de connexion RRC; et
la réception (S413), à partir de l'équipement utilisateur fonctionnant dans un état connecté RRC, de l'état de mobilité dans un message d'achèvement d'établissement de connexion RRC.

3. Equipement utilisateur configuré pour fonctionner dans un état inactif RRC, comprenant:
des moyens pour recevoir, tout en fonctionnant dans un état inactif RRC, d'informations de système diffusées à partir d'une station de base,
dans lequel les informations de système comportent une demande pour rapporter un état de mobilité de l'équipement utilisateur;
dans lequel, après que la demande est reçue et qu'un changement de l'état de mobilité est détecté, l'équipement utilisateur est configuré pour établir une connexion RRC avec la station de base; et
des moyens pour transmettre, à la station de base, l'état de mobilité dans un message d'achèvement d'établissement de connexion RRC.

4. Station de base comprenant:
des moyens pour diffuser des informations de système à un équipement utilisateur fonctionnant dans un état inactif RRC,
dans laquelle les informations de système comportent une demande pour rapporter un état de mobilité de l'équipement utilisateur;
des moyens pour recevoir, à partir de l'équipement utilisateur, un message de demande de connexion RRC;
des moyens pour transmettre un message d'établissement de connexion RRC en réponse au message de demande de connexion RRC; et
des moyens pour recevoir, à partir de l'équipement utilisateur fonctionnant dans un état connecté RRC, l'état de mobilité dans un message d'achèvement d'établissement de connexion RRC.
